# FASCICULE DE BREVET EUROPEEN

(11) **EP 3 273 170 B1**
(45) Date de publication et mention de la délivrance du brevet: **18.12.2019**
(21) Numéro de dépôt: 17179605.5
(22) Date de dépôt: 04.07.2017
(51) Int. Cl.: F25B 30/02, F24D 17/02, F24D 19/10, F25B 49/02, F24D 17/00

(54) **INSTALLATION DE PRODUCTION D'EAU CHAUDE AVEC UN CIRCUIT THERMODYNAMIQUE ALIMENTÉ PAR CELLULES PHOTOVOLTAÏQUES**
ANLAGE ZUR HEISSWASSERBEREITUNG MIT EINEM THERMODYNAMISCHEN SCHALTKREIS, DER ÜBER FOTOVOLTAIKZELLEN GESPEIST WIRD
INSTALLATION FOR PRODUCING HOT WATER WITH A THERMODYNAMIC CIRCUIT POWERED BY PHOTOVOLTAIC CELLS

(30) Priorité: 20.07.2016 FR 1656892
(43) Date de publication de la demande: 24.01.2018
(73) Titulaire: ALDES AERAULIQUE, 69200 Venissieux Cedex (FR)
(72) Inventeur: BERTRAN, Fabien, 31000 TOULOUSE (FR); BUSEYNE, Serge, 31200 TOULOUSE (FR); LABAUME, Damien, 31570 PRESERVILLE (FR)
(74) Mandataire: Chevalier, Renaud Philippe

(56) Documents cités:
- WO-A1-2011/087360
- FR-A1- 2 926 353
- FR-A1- 3 023 361
- US-A1- 2015 354 833

## Description

La présente invention concerne une installation de production d'eau chaude thermodynamique comportant des panneaux photovoltaïques, notamment pour des bâtiments individuels ou collectifs, de logement ou de service.

Les bâtiments de logement ou de service comportent généralement un système de production d'eau chaude sanitaire, nécessaire pour différents usages domestiques.

Les différentes solutions d'isolation des murs, de la toiture et des ouvrants des bâtiments permettent de réduire les consommations d'énergie nécessaires pour le chauffage de ces bâtiments. De plus, on cherche aussi à réduire la consommation d'énergie nécessaire pour la production d'eau chaude sanitaire, qui peut être, dans les maisons modernes du type basse consommation, l'installation consommant le plus d'énergie.

Pour la ventilation de l'habitation, il est connu d'utiliser une ventilation modulée dont le débit est ajusté aux besoins réels du bâtiment, mesurés par exemple par des capteurs du taux d'hygrométrie intérieure, afin de limiter les entrées d'air venant de l'extérieur qui refroidissent ce bâtiment en hiver.

Il est connu aussi de disposer une ventilation à double flux récupérant des calories sur le débit d'air sortant pour réchauffer le débit d'air entrant, afin de limiter les pertes de ces calories.

Par ailleurs, pour la production d'eau chaude sanitaire, il est connu d'utiliser un circuit thermodynamique de pompe à chaleur contenant un fluide frigorigène, comportant un évaporateur disposé dans le flux de sortie de la ventilation du bâtiment, pour récupérer des calories sur ce flux en réalisant une évaporation endothermique du fluide à basse pression, et un condenseur disposé dans un réservoir appelé aussi ballon d'eau chaude, afin de délivrer des calories à cette eau par la condensation exothermique de la vapeur à haute pression.

Le circuit thermodynamique comporte aussi un compresseur de mise en pression du fluide avant l'entrée du condenseur, et un détendeur avant l'entrée de l'évaporateur. Généralement, le compresseur fonctionne à une vitesse fixe, avec une simple commande de marche et arrêt, en consommant une puissance électrique constante.

On réalise ainsi une récupération d'une partie de l'énergie calorifique du flux sortant de la ventilation du bâtiment.

Afin d'optimiser le fonctionnement du circuit thermodynamique, une installation de production d'eau chaude sanitaire connue, présentée notamment par le document FR-A1-2926353, comporte un système de ventilation équipé de moyens de réglage du débit d'air extrait, et un compresseur du circuit thermodynamique comprenant un compresseur à vitesse variable permettant de modifier le débit du fluide frigorigène.

Toutefois, pour ce type d'installation, dans le cas d'une alimentation en courant électrique fournissant une puissance électrique variable, un problème se pose pour optimiser le fonctionnement de cette installation en fonction de ce niveau d'énergie variable.

Le document US 2015/0354833 A1 divulgue une installation de production d'eau chaude comportant un système de ventilation, un réservoir de stockage, un système d'alimentation électrique propre délivrant une puissance variable, et un circuit thermodynamique équipé d'au moins un évaporateur prévu pour être disposé dans un flux d'air dudit système de ventilation d'un bâtiment, d'au moins un condenseur disposé dans le réservoir, et d'au moins un compresseur, l'installation comportant en outre des moyens de mesure de la puissance variable délivrée par le système d'alimentation électrique propre, et des moyens de régulation en fonction de la mesure donnée par ces moyens de mesure de la puissance variable.

La présente invention a notamment pour but d'éviter ces inconvénients de la technique antérieure.

Elle propose à cet effet une installation de production d'eau chaude comportant un système de ventilation, un réservoir de stockage, un système d'alimentation électrique propre délivrant une puissance variable, et un circuit thermodynamique équipé d'au moins un évaporateur prévu pour être disposé dans un flux d'air dudit système de ventilation d'un bâtiment, d'au moins un condenseur disposé dans le réservoir, et d'au moins un compresseur à vitesse variable, cette installation comportant en outre des moyens de mesure de la puissance variable délivrée par le système d'alimentation électrique propre, et des moyens de régulation de la vitesse dudit au moins un compresseur à vitesse variable en fonction de la mesure donnée par ces moyens de mesure de la puissance variable.

Un avantage de cette installation est que les moyens de régulation de la vitesse du compresseur permettent de s'adapter à la puissance variable du système d'alimentation électrique mesurée en permanence, qui peut comporter notamment des cellules photovoltaïques, en utilisant avec le meilleur rendement toute l'énergie délivrée par cette source d'alimentation.

L'installation de production d'eau chaude selon l'invention peut comporter de plus une ou plusieurs des caractéristiques suivantes, qui peuvent être combinées entre elles.

Avantageusement, les moyens de régulation de la vitesse du compresseur régulent aussi cette vitesse en fonction de caractéristiques du flux d'air dans le système de ventilation. De cette manière on exploite au mieux les calories disponibles dans ce flux d'air.

Avantageusement, les caractéristiques du flux d'air comportent la mesure de la température de ce flux en aval de l'évaporateur. On peut ainsi se mettre en limite du givrage de l'évaporateur.

Avantageusement, les moyens de régulation de la vitesse du compresseur commandent des paliers de vitesse du compresseur en fonction de niveaux de puissance variable disponibles.

Avantageusement, le réservoir comporte une résistance électrique interne qui peut être alimentée par le système d'alimentation électrique propre. Cette résistance permet d'utiliser un surplus de puissance électrique.

Dans ce cas, la résistance électrique interne peut aussi comporter une connexion permettant son alimentation par un réseau extérieur de distribution d'électricité.

Selon un mode de réalisation, le système d'alimentation électrique propre comporte des cellules photovoltaïques.

L'invention a aussi pour objet un ensemble d'installations de production d'eau chaude prévue pour plusieurs logements disposés dans un même bâtiment, comportant plusieurs installations de production d'eau chaude comprenant l'une quelconque des caractéristiques précédentes, installées dans différents logements, et un système de ventilation comportant au moins certains éléments communs pour ces différents logements.

L'invention a de plus pour objet un procédé de commande d'une installation de production d'eau chaude comprenant l'une quelconque des caractéristiques précédentes, qui alimente en priorité avec la puissance variable le ou les ventilateurs activant le flux d'air, et ensuite au moins un compresseur à des vitesses variables en fonction de l'énergie restante.

En complément, le procédé de commande peut, après l'alimentation des compresseurs à des vitesses variables, en fonction de l'énergie restante, alimenter une résistance électrique interne disposée dans le réservoir.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un diagramme présentant en fonction du temps, le fonctionnement du compresseur d'un circuit thermodynamique à vitesse fixe, prévu pour une installation de production d'eau chaude selon l'art antérieur ;
- la figure 2 présente une installation de production d'eau chaude selon l'invention ;
- la figure 3 est un diagramme présentant en fonction du temps, le fonctionnement du compresseur du circuit thermodynamique à vitesse variable de cette installation de production d'eau chaude ;
- la figure 4 est un diagramme présentant en fonction du temps pour des installations selon l'art antérieur et selon l'invention, des énergies cumulées délivrées au réservoir d'eau chaude ; et
- la figure 5 présente un habitat collectif équipé d'une installation de production d'eau chaude selon l'invention ;

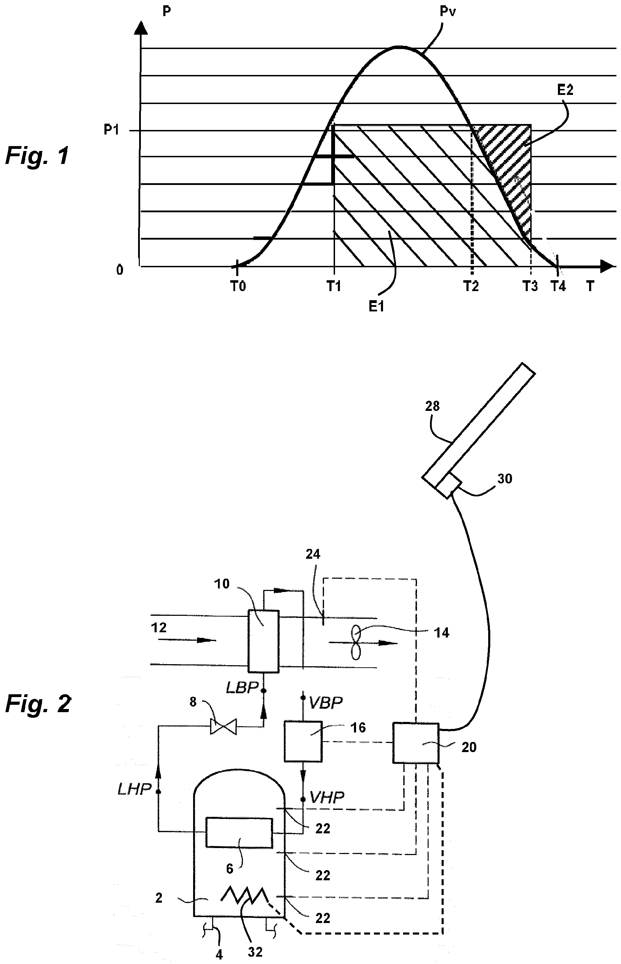

La figure 1 présente la puissance électrique P en fonction du temps T. Des cellules photovoltaïques délivrent une puissance électrique variable Pv au cours d'une journée, du temps T0 au temps T4, suivant une courbe correspondant à la montée progressive du soleil puis à sa descente.

Une installation de production d'eau chaude comportant un circuit thermodynamique comprenant un compresseur à vitesse fixe, nécessite un niveau de puissance minimal P1 pour permettre le fonctionnement de ce compresseur à sa vitesse nominale.

On a alors au temps T1 un démarrage du compresseur grâce à la puissance P1 délivrée par les cellules photovoltaïques qui devient suffisante. La vitesse du compresseur étant constante, la puissance électrique variable Pv délivrée par les cellules photovoltaïques montant au-dessus du niveau de puissance P1, n'est alors pas utilisée.

Au temps T2 la puissance délivrée par les cellules photovoltaïques devient insuffisante. On peut avoir un arrêt du compresseur et de la production d'eau chaude, en particulier si l'installation ne comporte pas d'autre source d'énergie électrique.

On peut aussi avoir en variante une continuation de ce fonctionnement en prélevant une puissance électrique complémentaire E2 sur un réseau extérieur de distribution d'électricité.

Au temps T3 on arrête le fonctionnement du compresseur, en estimant que la part d'énergie récupérée sur les cellules photovoltaïques est trop faible par rapport à celle prélevée sur le réseau extérieur. On a alors récupéré une énergie totale E1 sur les cellules photovoltaïques.

La figure 2 présente une installation de production d'eau chaude comportant un réservoir d'eau chaude 2 comprenant des raccords 4 pour l'entrée d'eau froide et la sortie d'eau chaude de puisage, et à l'intérieur un condenseur 6 d'un circuit thermodynamique, délivrant des calories à l'eau de ce réservoir lors de la condensation exothermique de la vapeur circulant à l'intérieur.

Le circuit thermodynamique comporte dans l'ordre de circulation du fluide, après le condenseur 6 délivrant du liquide haute pression « LHP », un détendeur 8 qui délivre du liquide basse pression « LBP » à un évaporateur 10 disposé dans une gaine recevant le flux d'air de ventilation 12 d'un bâtiment, aspiré par un ventilateur 14, pour récupérer des calories dans ce flux d'air afin de permettre l'évaporation endothermique.

Avantageusement le système de ventilation du bâtiment comporte des moyens de régulation du débit d'air pour optimiser le prélèvement d'air en réduisant la consommation d'énergie, en particulier pour le chauffage de ce bâtiment. On peut notamment utiliser des sondes hygrométriques pour ajuster le renouvellement de l'air du bâtiment en fonction des besoins.

L'évaporateur 10 délivre de la vapeur basse pression « VBP » à un compresseur 16, qui en fonctionnement délivre de la vapeur haute pression « VPH » au condenseur 6.

Des cellules photovoltaïques 28 disposées sur le toit du bâtiment, délivrent une puissance électrique à une unité centrale de commande formant un moyen de régulation de la vitesse du compresseur 20, en passant par un dispositif de mesure de la puissance délivrée 30.

L'unité centrale de commande 20 reçoit l'information de la puissance variable Pv fournie par les cellules photovoltaïques 28 venant du dispositif de mesure de la puissance 30, ainsi que les informations de capteurs de température 22 disposés à différentes hauteurs dans le réservoir 2, et d'un capteur de température 24 disposé dans le flux d'air de ventilation 12 du bâtiment en aval de l'évaporateur 10, afin de prendre en compte à la fois les besoins de chauffage de l'eau de ce réservoir et la puissance électrique variable Pv disponible, pour piloter la vitesse du compresseur 16.

En option une résistance électrique 32 peut être installée dans le réservoir 2, alimentée par les cellules photovoltaïques 28 en passant par l'unité centrale de commande 20. En option complémentaire, cette résistance électrique 32 peut être aussi alimentée par un réseau extérieur de distribution d'électricité.

La régulation de l'installation de production d'eau chaude est optimisée pour utiliser avec le circuit thermodynamique la plus grande partie de la production d'énergie solaire, afin d'exploiter au mieux les calories du flux d'air de ventilation 12.

Pour cela la production d'énergie solaire est mesurée en permanence par le dispositif de mesure de puissance 30. On alimente de manière prioritaire le ventilateur 14 du flux d'air de ventilation 12 afin d'assurer la ventilation du bâtiment et le flux dans l'évaporateur 10.

On alimente ensuite avec l'énergie restante le compresseur 16 pour obtenir la vitesse de rotation la plus élevée donnant le débit le plus fort du fluide frigorigène, en tenant compte de la température du flux d'air de ventilation 12 en sortie de l'évaporateur 10 donnée par la sonde de température 24, afin d'éviter un givrage de cet évaporateur.

S'il reste une puissance électrique non consommée, en particulier s'il faut baisser la vitesse de rotation du compresseur 16 pour éviter le givrage de l'évaporateur 10, alors le surplus de puissance délivrée par les cellules photovoltaïques 28 alimente la résistance électrique interne 32 afin de chauffer directement l'eau par effet joule.

Dans le cas d'un bâtiment ne disposant pas de ventilateur pour gérer le flux d'air de ventilation 12, l'énergie électrique produite sert alors à alimenter en priorité le compresseur 16, et suivant la puissance disponible restante la résistance électrique interne 32.

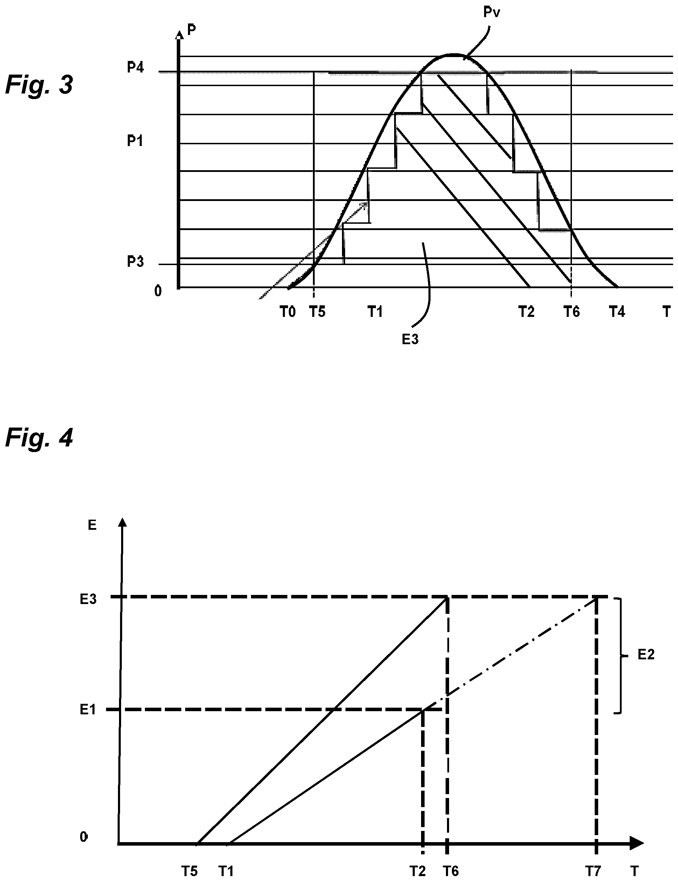

La figure 3 présente pour le même ensoleillement de la journée donnant une puissance électrique variable Pv délivrée par les cellules photovoltaïques 28 identique, un démarrage du compresseur 16 au temps T5 correspondant au premier seuil de puissance P3, qui est bien antérieur au temps T1, avec une première vitesse faible adaptée à cette puissance disponible.

On a ensuite en fonction de la montée du soleil et de l'augmentation de la puissance électrique variable Pv, des passages successifs à des vitesses du compresseur 16 plus élevées, absorbant à chaque fois une puissance électrique plus importante suivant des créneaux, et permettant par le débit plus fort du fluide frigorigène de restituer des calories en plus grand nombre dans le réservoir d'eau chaude 2.

On obtient aussi en montant à des vitesses de rotation du compresseur 16 plus élevées que la vitesse constante du compresseur présenté figure 1, correspondant au niveau de puissance P1, l'utilisation d'une puissance plus forte délivrée par les cellules photovoltaïques 28.

De même lors de la descente du soleil les vitesses du compresseur 16 diminuent par créneaux, avec une prolongation de l'utilisation de l'énergie jusqu'au temps T6 qui va au-delà du temps T2 présenté figure 1.

Grâce à la gestion par l'unité centrale de commande 20, des puissances variables Pv disponibles indiquées à cette unité par le dispositif de mesure de la puissance 30, on obtient une énergie totale récupérée E3 nettement supérieure à l'énergie E1 récupérée avec le compresseur 16 à vitesse fixe.

La figure 4 présente en fonction du temps T l'énergie cumulée E pour les différentes installations.

Pour l'installation selon l'art antérieur présenté figure 1, on a un chauffage de l'eau du temps T1 au temps T2 avec un cumul d'énergie délivrée E1.

Pour l'installation selon l'invention on a un chauffage de l'eau démarrant plus tôt, au temps T5, et finissant plus tard au temps T6, avec une pente plus forte, qui donne un cumul d'énergie délivrée E2.

Si on veut obtenir le même niveau d'énergie élevé E3 avec l'installation selon l'art antérieur, il faut prolonger le chauffage de l'eau avec un apport d'énergie électrique extérieure utilisant une résistance interne dans le réservoir 2, jusqu'au temps T7 en consommant l'énergie supplémentaire E2.

D'une manière générale on peut utiliser à la place des cellules photovoltaïques tout type de source d'énergie électrique renouvelable propre à l'installation, comme une éolienne par exemple.

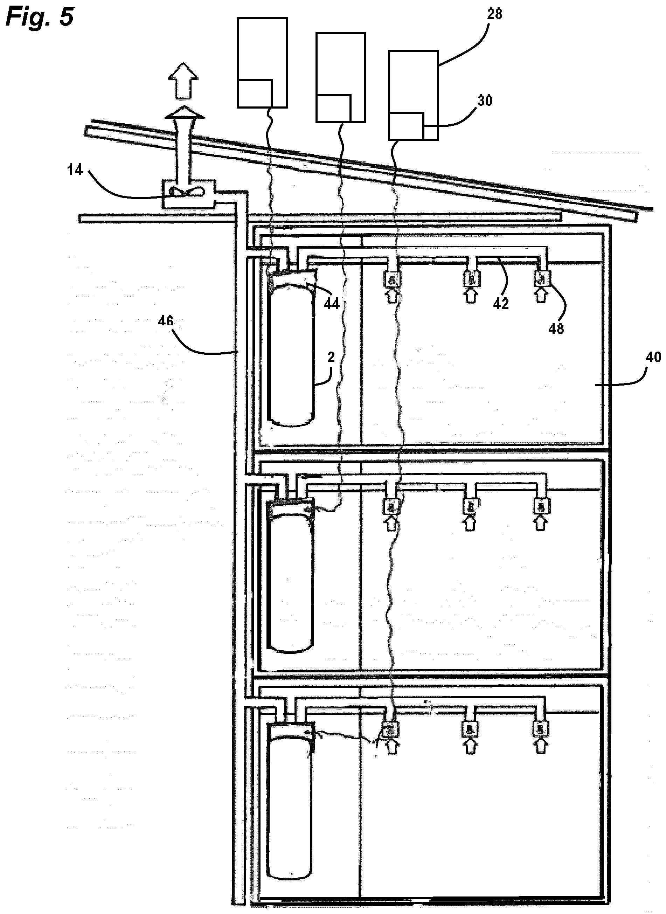

La figure 5 présente des logements 40 contenus dans un immeuble collectif, comportant suivant ce qui est présenté par le document FR-A1-2926626, pour chaque logement une pompe à chaleur comprenant un condenseur 44 qui est réchauffé par de l'air d'extraction venant d'un conduit d'extraction 42 présentant à ses extrémités des bouches d'extraction d'air 48.

Le condenseur 44 réchauffe un ballon d'eau chaude 2 disposé dans chaque logement 40. L'air d'extraction est ensuite dirigé par un conduit de sortie 46 reprenant l'air de chaque logement 40, vers une bouche d'extraction commune pour l'ensemble de l'immeuble, comportant un ventilateur 14.

Chaque logement possède ses cellules photovoltaïques propres 28 comportant leur dispositif de mesure de la puissance délivrée 30, pour alimenter le compresseur à vitesse variable de sa pompe à chaleur.

## Revendications

1. Installation de production d'eau chaude comportant un système de ventilation, un réservoir de stockage (2), un système d'alimentation électrique propre (28) délivrant une puissance variable (Pv), et un circuit thermodynamique équipé d'au moins un évaporateur (10) prévu pour être disposé dans un flux d'air (12) dudit système de ventilation d'un bâtiment, d'au moins un condenseur (6) disposé dans le réservoir (2), et d'au moins un compresseur à vitesse variable (16), l'installation comportant des moyens de mesure (30) de la puissance variable (Pv) délivrée par le système d'alimentation électrique propre (28), et des moyens de régulation de la vitesse (20) dudit au moins un compresseur à vitesse variable (16) en fonction de la mesure donnée par ces moyens de mesure (30) de la puissance variable (Pv).

2. Installation de production d'eau chaude selon la revendication 1, **caractérisée en ce que** les moyens de régulation de la vitesse du compresseur (20) régulent aussi cette vitesse en fonction de caractéristiques du flux d'air (12) dans le système de ventilation.

3. Installation de production d'eau chaude selon la revendication 2, **caractérisée en ce que** les caractéristiques du flux d'air (12) comportent la mesure de la température de ce flux en aval de l'évaporateur (10).

4. Installation de production d'eau chaude selon l'une quelconque des revendications précédentes, **caractérisée en ce que** les moyens de régulation de la vitesse du compresseur (20) commandent des paliers de vitesse du compresseur (16) en fonction de niveaux de puissance variable (Pv) disponibles.

5. Installation de production d'eau chaude selon l'une quelconque des revendications précédentes, **caractérisée en ce que** le réservoir (2) comporte une résistance électrique interne (32) qui peut être alimentée par le système d'alimentation électrique propre (28).

6. Installation de production d'eau chaude selon la revendication 5, **caractérisée en ce que** la résistance électrique interne (32) comporte une connexion permettant son alimentation par un réseau extérieur de distribution d'électricité.

7. Installation de production d'eau chaude selon l'une quelconque des revendications précédentes, **caractérisée en ce que** le système d'alimentation électrique propre (28) comporte des cellules photovoltaïques.

8. Ensemble d'installations de production d'eau chaude prévue pour plusieurs logements (40) disposés dans un même bâtiment, **caractérisé en ce qu'**il comporte plusieurs installations de production d'eau chaude selon l'une quelconque des revendications précédentes, installées dans différents logements (40), et un système de ventilation comportant au moins certains éléments communs pour ces différents logements (40).

9. Procédé de commande d'une installation de production d'eau chaude selon l'une quelconque des revendications 1 à 7, **caractérisé en ce qu'**il alimente en priorité avec la puissance variable (Pv) les ventilateurs (14) activant le flux d'air (12), ensuite au moins ledit compresseur (16) à des vitesses variables en fonction de l'énergie restante.

10. Procédé de commande d'une installation de production d'eau chaude selon la revendication 9, **caractérisé en ce qu'**après l'alimentation des compresseurs (16) à des vitesses variables, en fonction de l'énergie restante il alimente une résistance électrique interne (32) disposée dans le réservoir (2).

## Patentansprüche

1. Anlage zur Heißwasserbereitung, die ein Lüftungssystem, einen Lagertank (2), ein eigenes Stromversorgungssystem (28), das eine variable Leistung (Pv) liefert, und einen thermodynamischen Schaltkreis, der mit mindestens einem Verdampfer (10), der vorgesehen ist, um in einem Luftstrom (12) des Lüftungssystems eines Gebäudes angeordnet zu werden, mindestens einem Kondensator (6), der in dem Tank (2) angeordnet ist, und mindestens einem Kompressor mit variabler Drehzahl (16) ausgestattet ist, beinhaltet, wobei die Anlage Mittel zum Messen (30) der variablen Leistung (Pv) beinhaltet, die von dem eigenen Stromversorgungssystem (28) geliefert wird, und Mittel zum Regeln der Drehzahl (20) des mindestens einen Kompressors mit variabler Drehzahl (16) in Abhängigkeit von dem durch diese Mittel zum Messen (30) der variablen Leistung (Pv) gegebenen Messwert.

2. Anlage zur Heißwasserbereitung nach Anspruch 1, **dadurch gekennzeichnet, dass** die Mittel zum Regeln der Drehzahl des Kompressors (20) auch diese Drehzahl in Abhängigkeit von Merkmalen des Luftstroms (12) in dem Lüftungssystem regeln.

3. Anlage zur Heißwasserbereitung nach Anspruch 2, **dadurch gekennzeichnet, dass** die Merkmale des Luftstroms (12) den Messwert der Temperatur dieses Stroms stromabwärts des Verdampfers (10) beinhalten.

4. Anlage zur Heißwasserbereitung nach einem der vorstehenden Ansprüche, **dadurch gekennzeichnet, dass** die Mittel zum Regeln der Drehzahl des Kompressors (20) Drehzahlstufen des Kompressors (16) in Abhängigkeit von verfügbaren Niveaus variabler Leistung (Pv) ansteuern.

5. Anlage zur Heißwasserbereitung nach einem der vorstehenden Ansprüche, **dadurch gekennzeichnet, dass** der Tank (2) einen internen elektrischen Widerstand (32) beinhaltet, der von dem eigenen Stromversorgungssystem (28) versorgt werden kann.

6. Anlage zur Heißwasserbereitung nach Anspruch 5, **dadurch gekennzeichnet, dass** der interne elektrische Widerstand (32) einen Anschluss beinhaltet, der seine Versorgung durch ein externes Stromverteilungsnetz erlaubt.

7. Anlage zur Heißwasserbereitung nach einem der vorstehenden Ansprüche, **dadurch gekennzeichnet, dass** das eigene Stromversorgungssystem (28) Fotovoltaikzellen beinhaltet.

8. Anlagenkomplex zur Heißwasserbereitung, der für mehrere Wohnungen (40) vorgesehen ist, die in einem selben Gebäude angeordnet sind, **dadurch gekennzeichnet, dass** er mehrere Anlagen zur Heißwasserbereitung nach einem der vorstehenden Ansprüche beinhaltet, die in verschiedenen Wohnungen (40) installiert sind, und ein Lüftungssystem, das mindestens bestimmte gemeinsame Elemente für diese verschiedenen Wohnungen (40) beinhaltet.

9. Verfahren zum Steuern einer Anlage zur Heißwasserbereitung nach einem der Ansprüche 1 bis 7, **dadurch gekennzeichnet, dass** es vorrangig die Lüfter (14), die den Luftstrom (12) aktivieren, mit der variablen Leistung (Pv) versorgt, danach, in Abhängigkeit von der verbleibenden Energie, mindestens den Kompressor (16) mit variablen Drehzahlen.

10. Verfahren zum Steuern einer Anlage zur Heißwasserbereitung nach Anspruch 9, **dadurch gekennzeichnet, dass** es nach der Versorgung der Kompressoren (16) mit variablen Drehzahlen, in Abhängigkeit von der verbleibenden Energie, einen internen elektrischen Widerstand (32) versorgt, der in dem Tank (2) angeordnet ist.

## Claims

1. A hot water production installation including a ventilation system, a storage tank (2), a clean electric power supply system (28) delivering a variable power (Pv), and a thermodynamic circuit equipped with at least one evaporator (10) intended to be disposed in an air flow (12) of said ventilation system of a building, with at least one condenser (6) disposed in the tank (2), and with at least one variable speed compressor (16), the installation including means (30) for measuring the variable power (Pv) delivered by the clean electric power supply system (28), and means (20) for regulating the speed of said at least one variable speed compressor (16) according to the measurement provided by these means (30) for measuring the variable power (Pv).

2. The hot water production installation according to claim 1, **characterized in that** the means (20) for regulating the speed of the compressor also regulate this speed characteristics of the air flow (12) in the ventilation system.

3. The hot water production installation according to claim 2, **characterized in that** the characteristics of the air flow (12) include the measurement of the temperature of this flow downstream of the evaporator (10).

4. The hot water production installation according to any one of the preceding claims, **characterized in that** the means (20) for regulating the speed of the compressor control speed steps of the compressor (16) according to available variable power levels (Pv).

5. The hot water production installation according to any one of the preceding claims, **characterized in that** the tank (2) includes an internal electrical resistance (32) which can be powered by the clean electric power supply system (28).

6. The hot water production installation according to claim 5, **characterized in that** the internal electrical resistance (32) includes a connection enabling its power supply by an external electrical distribution network.

7. The hot water production installation according to any one of the preceding claims, **characterized in that** the clean electric power supply system (28) includes photovoltaic cells.

8. A set of hot water production installations provided for several housings (40) arranged in the same building, **characterized in that** it includes several hot water production installations according to any one of the preceding claims, installed in different housings (40), and a ventilation system including at least some common elements for these different housings (40).

9. A method for controlling a hot water production installation according to any one of claims 1 to 7, **characterized in that** it firstly powers, with the variable power (Pv), the fans (14) activating the air flow (12), then at least said compressor (16) at variable speeds depending on the remaining energy.

10. The method for controlling a hot water production installation according to claim 9, **characterized in that** after the power supply of the compressors (16) at variable speeds, depending on the remaining energy, it powers an internal electrical resistance (32) disposed in the tank (2).
